# EUROPEAN PATENT SPECIFICATION

(11) **EP 3 142 495 B1**
(45) Date of publication and mention of the grant of the patent: **11.01.2023**
(21) Application number: 15789342.1
(22) Date of filing: 11.05.2015
(51) Int. Cl.: A23K 10/40, A23K 20/20, A23K 10/38, A23L 33/10, A23L 33/21

(54) **DIGESTIVE SUPPLEMENT TO MITIGATE ADVERSE REACTIONS**
VERDAUUNGSFÖRDERNDE NAHRUNGSERGÄNZUNG ZUR ABSCHWÄCHUNG VON NEBENWIRKUNGEN
COMPLÉMENT DIGESTIF PERMETTANT D'ATTÉNUER DES RÉACTIONS INDÉSIRABLES

(30) Priority: 09.05.2014 AU 2014901724
(43) Date of publication of application: 22.03.2017
(73) Proprietor: Hicare Health Foods Pty Limited, Buderim, Queensland 4556 (AU)
(72) Inventor: TIVEY, David, Buderim, Queensland 4556 (AU); VAN DOORE, Frank, Buderim, Queensland 4556 (AU)
(74) Representative: FRKelly
(86) International application number: PCT/AU2015/050233
(87) International publication number: WO 2015/168751

(56) References cited:
- CN-A- 1 135 471
- CN-A- 102 940 134
- CN-A- 103 243 028
- GB-A- 1 567 846
- GB-A- 1 567 846
- US-A1- 2011 150 853

## Description

### Technical Field

The invention relates to the field of commercial food manufacture. In particular, the invention relates to a digestive supplement that assists in the enhancement of digestive health of canines.

### Background of the Invention

In the field of medical research, dogs have been used extensively for research. Specifically, dogs have shown to be a good model for human atopic diseases. "Numerous similarities exist between the human disease and the animal counterparts to the extent that animals could be used as models to improve our understanding of the pathogenesis of human Atopic Diseases". ¹

A review by J. Dressman (1986) identified that dogs can be used as effective models for gastrointestinal physiology and digestion in man.²

Therefore, based on these studies and work done other researchers in this field, preliminary data obtained from dog studies has direct application to the target species and can be reliably extrapolated to humans.

While this invention relates to the development of dedicated products for canines, specialist supplements have been developed from the disclosure for human use. These supplements have undergone limited human testing.

A case study involving an individual recovering from Chemotherapy was documented. The individual who had undergone Chemotherapy using Carboplatin in the treatment for testicular cancer. Carboplatin can cause severe allergic reactions and has been shown to have a significant side effect of gastrointestinal distress. The individual added a supplement based on the disclosure to his diet on a daily basis during chemotherapy treatment and for several months after. The individual did not report any adverse effects from consuming the supplement. The supplement apparently minimised the side effects of the chemotherapy as there were no reports of nausea or other forms
¹ "Animal Models of Atopic Dermatitis" R. Marsella and T. Olivry, Clinics in Dermatology 2003, 21:122-133
² Comparison of Canine and Human Gastrointestinal Physiology (Dressman J., Pharmaceutical Research 1986 3 (3) 123-131 of intestinal distress such as diarrhoea and vomiting. It is hypothesised that the supplement assisted in the normalisation of the immune system.

In the past ten years, the number of pets presenting at veterinary surgeries with food allergies has been rising: "It has been estimated that 20-75% of small animals seen in the average practice have skin problems as the main or concurrent complaint. In 1998, a nationwide survey in Japan revealed that canine skin disorders were one of the most common reasons for visits to the veterinary clinic."³

Adverse food reactions can occur in in up to eight per cent of dogs, with up to 25 per cent of all skin dermatoses can be attributed to adverse food reactions. However, only 10 to 15 per cent of dogs will have concurrent intestinal symptoms. There does not appear to be a breed or sex predisposition, and onset can occur at any life stage.⁴

Food allergy is probably the third most common hypersensitivity skin disease in dogs and cats after flea allergy and atopy.⁵

The commercial petfood and veterinary industries have reacted to this problem with the development of specialist diets and medications. Whilst these developments have given some relief to pets and their owners, a more fundamental understanding of the digestive processes and food allergy reactions has been needed so that a long term solution could be formulated.

Clinical signs of a food allergy can be variable, depending on the individual response, although the major clinical signs are itching and digestive problems. The diagnosis of food allergy can be difficult, as there is no single and completely reliable test available to help the clinician to confirm or refute the presence of food sensitivity. A diagnosis is usually based on dietary investigation in the form of elimination diets and test meals.

The allergic reaction can present itself in many manifestations. In companion animals, the major observable effects of an allergy are seen as frequent ear infections, poor coat quality, skin irritations and digestive issues. Skin irritations present as
³ 'Diagnosis of atopic dermatitis in dogs' Masahiko Nagata DVM, MS; WALTHAM Focus, Vol 10 No 2, 2000
⁴ E.Z. Veenhof et al 2012 Veterinary Quarterly, 32 (2) 87 - 89.
⁵ B. Novotny, "Questions and Answers about Food Allergies in Dogs and Cats" http://www.woodhavenlabs.com/foodallergy.html unsightly, possibly odorous, red patches on the skin. These irritations can cause the animal significant distress that may result in incessant scratching. Where a pet scratches excessively, it is not uncommon for the pet to scratch to the point of bleeding which is not only unpleasant for the owner and animal but it may also lead to other complications such as skin infections and disease.

Digestive issues can result in a range of physical indicators, including low food consumption and problems such as loose bowel motions. Loose bowel motions are not only a problem for the pet but also for the owner as it can present a cleaning and hygiene issue. Initially the pet food industry responded to this problem with the inclusion of insoluble fibres and other ingredients that tended to bulk up faeces. While this was a good short term fix for the symptom, a greater and specific health agenda was needed to be undertaken to solve the fundamental problem.

More recently the industry has responded with the development of elimination diets. These consist of foods which have ingredients that are chosen for having a low allergic reaction status. These diets can frequently contain unusual protein and carbohydrate sources which have a significant impact on the cost of the product to the owner. Elimination diets for dogs include lamb, chicken, rabbit, kangaroo, emu, horse meat and various species of fish as sources of protein, while rice or potatoes are the most popular carbohydrate sources.

The philosophy behind the use of the elimination diet is that it seeks to remove the allergen and avoid the adverse reaction and the subsequent sensitivity, such as a particular protein or the associated carbohydrate. Thus, by removing the suspected allergen and replacing it with novel proteins and carbohydrates, it is expected that the allergic reaction will subside. This approach, although successful in the short term, does not address the actual causes of the allergic reaction in the first place. The quote below demonstrates the difficulty in the use of elimination diets.

"Veterinarians used to regularly recommend lamb and rice for restrictive food trials because it was a food source not found in normal mixes. Lamb and rice was recommended for food allergy testing for so many years that the public got the impression that it was good for the skin. Companies started advertising their lamb and rice mixes as 'recommended by dermatologists.' So now if you go to a pet store, you can find a fairly wide selection of lamb and rice foods, most of which also contain corn, beef, chicken, and other components. These lamb and rice mixes do provide a complete diet; however, a lamb and rice diet is not inherently better than a normal diet. The popularity of the mixes has made them undesirable for restrictive diet trials unless owners know that their pet has never eaten a lamb and rice mix and unless there are no other protein or carbohydrate sources in the lamb and rice mix," ⁶

Specialist low allergenic pet diets are expensive, costing up to ten times that of the normal commercial food products. While the elimination diet can be home prepared, it is normal for the veterinary physician to recommend one of the commercially available Low Allergy Diets.

If the elimination diet route is unsuccessful, the second line of defence is steroid injections or immunotherapy to lessen the allergic impacts. While steroid injections and drugs can be successful, they may lose effectiveness in the long term and can have significant side effects. Steroid treatments are also expensive as the animal will require ongoing treatment. However, such methods are only addressing the symptoms and not the cause of the adverse response to allergens.

Some prior art documents have dealt with additives to a companion animal's diet to alleviate these problems. US Patent Application US 2005/0119222 by the Procter & Gamble Company and improve digestive health. While this is valid for assisting the animal in improving lower gut processes and forming better stools, it does not treat the underlying allergic reaction which may be the cause of the problem.

Other prior arts have dealt with additives that include yeast and Montmorillonite. For example, UK patent application GB1567846 A discloses a fish-lure composition comprising inactivated yeast and/or autolysed yeast (*Saccharomyces cerevisiae*) and clays such as Bentonite or Montmorillonite.

Chinese patent application CN102940134 A discloses a feed additive composition comprising beer yeast powder and Montmorillonite. Also, Chinese patent application CN1135471 A discloses an organic fertilizer for poultry manure comprising edible yeast powder and Montmorillonite powder.

Accordingly, it is an object of the invention to provide a commercial pet food that ameliorates at least some of the problems associated with the prior arts.
⁶ "Food Allergies: The Truth about Lamb and Rice Mixes". Sarah Probst, Pet Column, July 6, 1998. http://vetmed.illinois.edu/petcolumns/petcols article page.php?OLDPETCOLID=113

### Summary of the Invention

According to the invention, there is provided a digestive supplement including inactivated whole cells and lysed cells of Saccharomyces cerevisiae, and Montmorillonite clay for use in improving the digestive health of canines. **Preferably, the digestive supplement** includes cell wall products from lysed cells of *Saccharomyces cerevisiae.* Preferably, the cell wall products include Mannans, Beta-glucans and B-group vitamins.

Initial research into the application of the yeast fragments (from Saccharomyces cerevisiae) showed that a reduction in allergic reaction in dogs could be effected through the use of this ingredient alone. However, this approach was limited in its ability to stabilize the environment of the digestive tract and it was not able to absorb all mycotoxins or assist with the repair of the gut lining. It was then decided not to focus on a single ingredient but look at other elements that can assist to manipulate or "bio-engineer" the gut environment and provide protection against mycotoxins, thought to be through the production of a protease, that degrade toxins, or through the removal of toxins by adsorption onto specific ingredients that have high binding capacity for six of the main mycotoxins that have detrimental effects.

Further research showed a blend could be prepared by adding the components of yeast, including cell wall fragments (Mannans, Beta glucans and B group vitamins) and a specific Montmorillonite mineral clay. It was found that the addition of the clay enabled the blend to not only bind bacteria but also mycotoxins.

Montmorillonite is a very soft phyllosilicate group of minerals that typically form in microscopic crystals, forming a clay. It is named after Montmorillon in France. Montmorillonite, a member of the Smectite family, is a 2:1 clay, meaning that it has 2 tetrahedral sheets sandwiching a central octahedral sheet.

More preferably, the digestive supplement further includes prebiotic material. To be optimally effective, the digestive supplement should preferably also carry out several other functions. These functions include the creation of a suitable intestinal environment and management of the rate of progression of food through the gut. Thus prebiotic ingredients enable the creation of a suitable environment. Advantageously, the prebiotic materials include at least one material selected from the group consisting of: inulin; glucose oligosaccharides derived from corn-starch; Psyllium fibre; xanthan gum; and Maltodrextrin.

The blend may then be yet further enhanced through the use of other ingredients, most advantageously: soluble and insoluble fibres and vegetable starches, glucose, dicalcium phosphate and vitamin C and other vitamins. These ingredients carry out several functions such as slowing progress of food through the gut and providing essential nutrients for the healthy bacterial environment to be established more efficiently. These additional ingredients interact with the whole yeast and yeast fragments to create the prebiotic environment.

Preferably, the digestive supplement is characterised by a dry mass ratio of yeast and yeast products to Montmorillonite clay is in the range 10:1 to 3:1; and a dry mass ratio of yeast and yeast products to prebiotic materials is in the range 20:1 to 4:1. Where the food product is for feeding to canines, the preferred ratio of yeast and yeast products to Montmorillonite clay is in the range 6:1 to 4:1.

Laboratory and in-home placement tests of a food supplement has shown that the combination of these ingredients in the ratios provided have a synergistic effect as each ingredient has an additive impact on the whole recipe that is greater than the effect of that anticipated by the addition of that ingredient alone.

Further advantages of a food product according to the invention include:
1. That the key ingredients disclosed above act synergistically to lessen the allergic response by reducing the production of pro-inflammatory cytokine by epithelial cells (e.g. cells that constitute the lining of the digestive tract) in response to allergen binding. This helps to maintain epithelial barrier function and reduces the risk of 'leaky gut' as well as loss of electrolytes.
2. That the food composition enhances cell-mediated immunity through the activation of macrophages.
3. That the food composition also provides essential nutrients for intestinal repair as it is a source of nucleotides that have been shown to promote repair of gut tissue after an inflammatory damage e.g. weaning or villus atrophy in response to dietary antigens.
4. That the food composition provides protection against the attack of specific pathogens groups through its ability to reduce the capacity of the pathogen to bind to the intestinal lining. To do this, the composition has specific ingredients that act as decoy molecules that bind to potential pathogenic bacteria e.g. *E*. *coli.* This helps to prevent colonisation of the digestive tract.
5. That the food composition provides specific digestive fibres to support and enhance digestive function through correct supplementation. The specific digestive fibres contain Oligosaccharides of varying length that provide proven fibre effects along the entire large bowel.
6. That the food composition also provides prebiotic nutrition through the addition of yeast cell wall fragments, inulin, glucose oligosaccharides, vitamin C and glucose, all of which tend to stimulate and enhance the growth of beneficial bacteria in the gut.
7. That the food composition also creates the environment in the large bowel that causes the modification of protein digestion. The fibre and prebiotic actions promote the incorporation of amino acids into bacterial protein. This tends to have the effect of reducing protein fermentation by-products in the faeces, resulting in less malodours and improved faeces formation, which is important for indoor animals.

Now will be described, by way of a specific, non-limiting example, a preferred embodiment of the invention.

### Detailed Description of the invention

The digestion process is one of the most complex multiphase and multicomponent operations that any animal undertakes on a daily basis. Its function is to extract the essential nutrients and energy needed for an individual to survive that day and to ensure the excretion of waste products.

In higher mammals, digestion and absorption is a highly evolved process with many stages and specific bodily secretions needed to ensure that the digestion, absorption and elimination processes happen at the appropriate stage during the food passage through the gut.

It has been known for many years that beneficial bacteria reside in the gut in what is, essentially, a symbiotic relationship with the mammalian host. The roles and functions of these bacteria is becoming better understood as research has focused more resources onto the type and function of each species found in different parts of the digestive tract.

As described above, the mode of action of the food composition according to the invention is one that positively modifies the environment of the gut to improve digestion of food as well as enhancing the body's overall immune status. This is a simplification of the actual process that is occurring within the digestive system. A more technical description would be that the inventive composition is responsible for the 'Bio- engineering' of the intestinal environment, especially the components that constitute the intestinal barrier, although the precise mode of action to affect such changes has not been described.

The intestinal or epithelial barrier is the boundary between the outside world and the body's inner workings. When functioning correctly it keeps the deleterious material out, allows waste products to be removed and, importantly, it allows essential nutrients into the body. Maintenance of this barrier is very important and energy- consuming. Anything that damages the system would clearly increase the requirement for energy and nutrients just to maintain this barrier.

Optimisation of the barrier not only protects from disease but also from the inappropriate presentation of potential allergens to the immune system and helps the body to maintain a hydrated state. Without a well-functioning intestinal barrier the individual is at risk of becoming unwell.

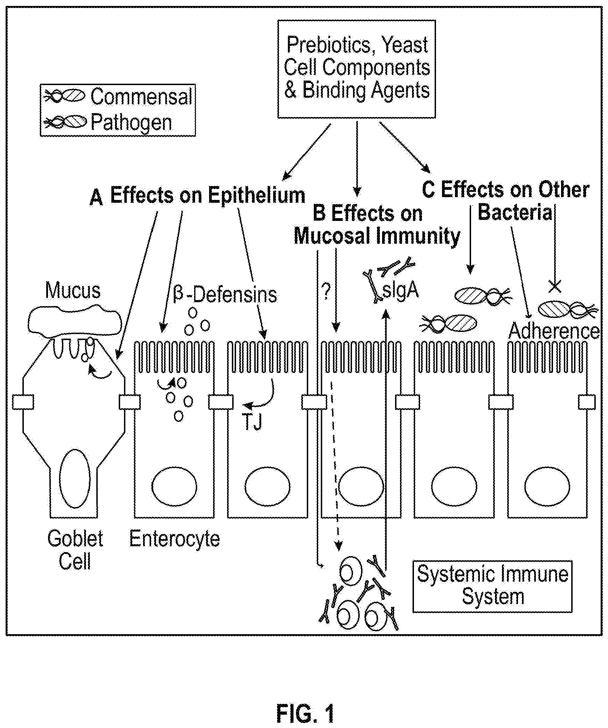

The components of the intestinal barrier are detailed in Figure 1. Essentially, the barrier consists of the epithelial cells that line the intestinal tract, the mucus that overlays these cells, bacteria that are either in the lumen or embedded in the mucus layer, specialised antigen sampling cells in the Peyer's patches and associate immune system associated with the intestinal tissue. Clearly, the system is complex and multifactorial; in addition, moving along the length of the gut the relative proportions of the barrier components change. Figure 1 also illustrates the tight communication between the immune system of the gut and the body (systematic).

The complex nature of the barrier requires that any product designed to support it must be multifunctional in nature. This may be achieved by a single compound that has more than one action. However, the inventors have determined that a multicomponent blend generated through the careful selection of a range of ingredients that target individual components of the barrier is required for consistent and reliable results. The food composition according to the invention has been designed according to the later premise. The ingredients used in the composition act either in an additive or synergic manner.

The digestive supplement according to the invention has been designed to safeguard multiple challenges to the integrity of the intestinal barrier thereby helping to promote both good gut health as well as overall well-being. One of the key advantages of the inventive composition is that it achieves these functions with a single product that is easy to use and highly palatable.

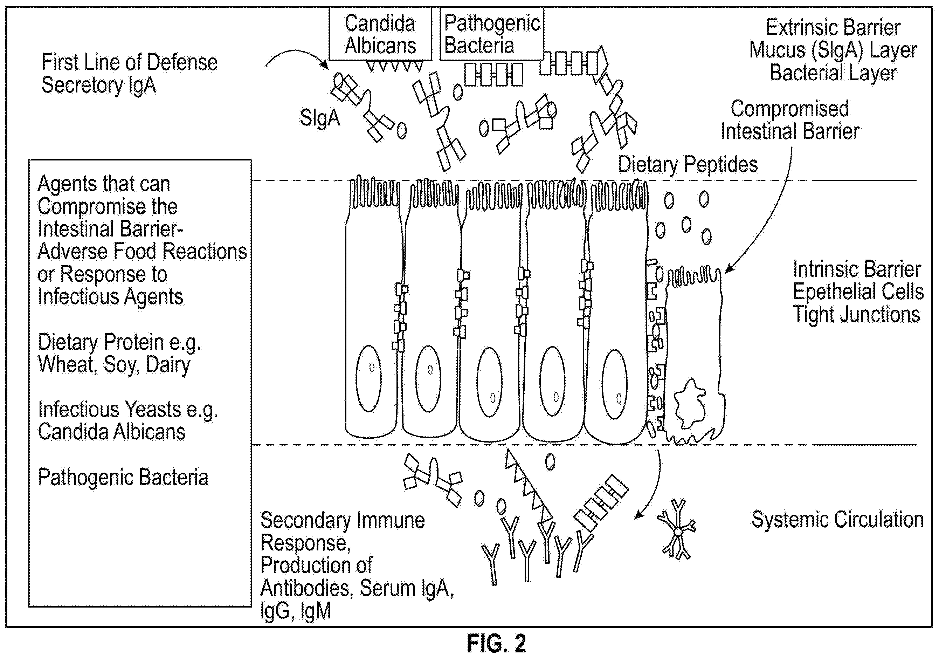

The appropriate first line of antibody defence against potentially harmful agents is the antibody: secretory IgA. This binds to the offending bacterial threat e.g. E. coli or dietary antigen, and aids in the elimination or neutralisation of the threat. Figure 2 illustrates the impact of a compromised intestinal barrier, which results in the transfer of partial breakdown products from protein (dietary peptides) passing freely through the spaces between adjacent intestinal cells. The net result is presentation of such peptide to the immune system resulting in a range of antibodies being made.

On the next presentation, the dietary peptide or protein is recognised by the immune system with the initiation of an immune reaction. This tends to result in an inflammation and damage of the intestinal tract. Under certain circumstance this can result in a life threatening hypersensitivity.

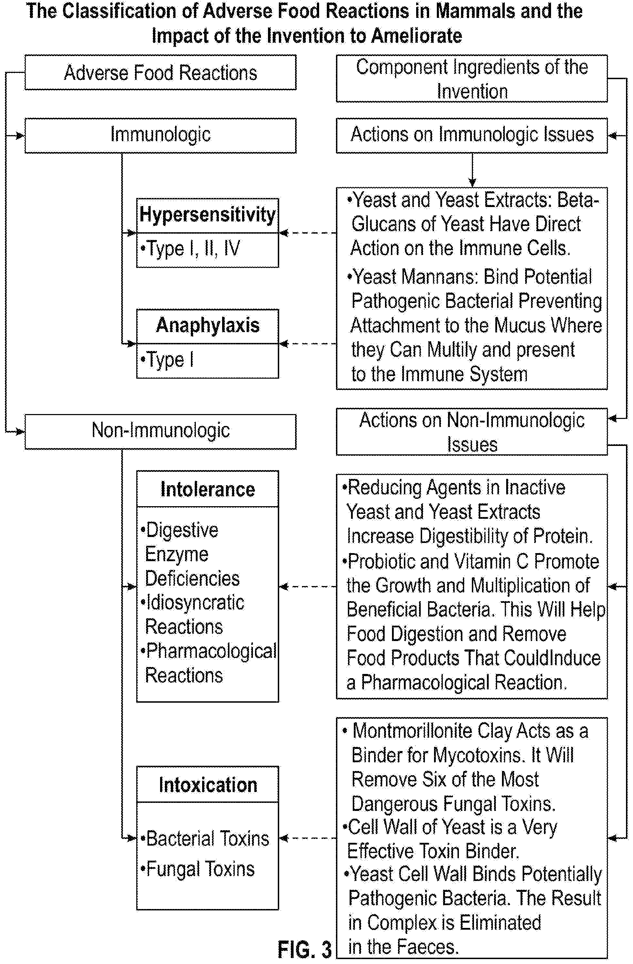

The consequence of a breakdown in barrier function (Figure 2) is an Adverse Food Reaction (AFR). AFRs are classified by type in Figure 3. The table also details the components of the composition that target this type of AFR.

The issue with AFRs is that they have multiple aetiologies, as shown in figure 3 below. Most of the immune responses result in marked clinical symptoms that, once diagnosed, are effectively treated by avoidance of the antigenic agent. However, adequate intestinal barrier function may provide a prophylaxis, in that an intact intestinal barrier would prevent presentation of antigen and hence the subsequent development of hypersensitivity. This may potentially provide a protection against the accidental consumption of the offending food antigen.

More common are the intolerances, intoxications or infections of the digestive tract. Most will result in the animal being 'off colour' with no defining diagnostics. The components in the disclosed composition can directly combat the cause of such AFRs and as such protect the animal from accidental consumption of bad or mouldy foods or ingestion of pathogenic bacteria. These functions are also enhanced by promoting beneficial bacteria through the prebiotic components in the composition.

In a preferred embodiment, the inventive digestive supplement for canines is comprised as set out in Table 1:

| **Table 1 - Typical Recipe** | |
|---|---|
| **Ingredient** | **Percentage ranges (Dry)** |
| Yeast and Yeast products (including inactivated whole cells and cell wall fragments from *Saccharomyces cerevisiae)* | 30 to 80% |
| Vegetable flour (Potato and/or Carrot) | 5 to 20% |
| Fibre (Psyllium, Xanthan and/or Inulin and/or maltodextrin) | 3 to 12% |
| Montmorillonite mineral clay | 3 to 15% |
| Glucose | 0.5 to 15% |
| Di-calcium Phosphate | 0.1 to 5% |
| Natural Flavours | 0.1 to 2% |
| Vitamin C | 0.5 to 3% |

In Table 1, the variation in the percentage ranges of the ingredients is to accommodate the differing requirements for humans and companion animals.

Variations are also required to allow for companion animals at different life stages and breeds. For example, a puppy will have different digestive needs and allergic responses to that of an adult. Similarly, an adult animal in the prime-of-life will have differing issues to a geriatric animal. Differing Breeds have also been shown to have varying responses and sensitivities to food allergens. Therefore, the optimal composition will vary depending on the breeds and life stage of the target animal, a general approach well understood in the art.

Initial investigations into the application of the yeast fragments (from *Saccharomyces cerevisiae*) showed that a reduction in the allergic reaction could be effected through the use of this ingredient alone. However, this approach was limited in its ability to stabilize the environment of the digestive tract and limited capacity to absorb mycotoxins and assist with the repair of the gut lining. It was then decided to focus not on a single ingredient but look at other elements that can assist to engineer the gut environment and provide protection against mycotoxins.

Further research showed a blend could be prepared by adding the Yeast cell wall fragments (principally: Mannans, Beta-glucans and B-group vitamins) and a specific Montmorillonite mineral clay. It was found that the addition of the clay enabled the blend to not only bind bacteria but also mycotoxins.

However, to be optimally effective, the composition has been designed to carry out several other functions. These functions include the need to create a suitable intestinal environment and manage the rate of progression of food through the gut. Thus prebiotic ingredients (inulin and glucose oligosaccharides derived from corn-starch) were sought to enable the creation of a suitable environment. The blend was then further enhanced through the use of soluble and insoluble fibres and vegetable starches, glucose, di-calcium phosphate and vitamin C.

These ingredients were selected to carry out several functions such as slowing progress of food through the gut and providing essential nutrients for the healthy bacterial environment to be established more efficiently. These additional ingredients are thought to interact with the whole inactivated yeast and yeast fragments to create the prebiotic environment.

Table 1 shows the approximate amounts of each of the individual components of the inventive food composition. If the amounts of each of the individual ingredients were consumed alone, it is anticipated that they would only have a limited impact on the animal. However, laboratory and in-home placement tests have shown that the combination of these ingredients in the ratios provided have an apparently synergistic effect, as each ingredient has an additive impact on the whole recipe that is greater that the effect of that ingredient alone.

The use of natural flavours and gels also aid in flavour development and texture development.

### Example 1: Evaluation of invention using In-Home Survey

After extensive laboratory testing, an in-home evaluation was carried out on a pet dog population. The study was undertaken to understand customer and consumer perception of the technology and its outcomes. The product was presented as a food supplement.

A test recipe, as shown in table 2 below, was derived using the base materials shown in table 1.

| **Table 2: Additive Recipe** | |
|---|---|
| **Ingredient** | **Percentage (Dry)** |
| Yeast and Yeast products | 51% |
| Vegetable flour | 14% |
| Fibre (Psyllium, Xanthan and/or Inulin and/or maltodextrin) | 5% |
| Montmorillonite mineral clay | 15% |
| Glucose | 12% |
| Di-calcium Phosphate | 1% |
| Natural Flavours | 1% |
| Vitamin C | 1% |

The pool of participants was sourced from the customer list of a local pet treat supply company and special interest groups relating to specific dog breeds. The prospective participants were first asked to fill out a preliminary survey questionnaire which included questions relating to the dogs breed, age, size, current diet and general health status.

The initial survey information was reviewed and twenty-one dogs were selected to enter the trial. The review endeavoured to ensure that a representative cross-section of the pet population was present in the trial. While some pets with severe health issues were excluded, it was decided to allow 33% of the test subjects to have pre-existing, but non-life threatening, medical issues to participate in the trial. Earlier research indicated that the specific health issues that these animals had may have benefitted through the use of test Additive to their diet. The test panel ran for thirty days.

All animals participating in the trial were considered adult pets with an average age of 6.54 years (Age range from 1.5 to 16.6 years, SD±4.5) and an average weight of 23.3kg (Weight Range from 3.6 to 56kg, SD±14.6).

The participants were instructed to include the Additive into their dogs existing diet either by direct addition of the powder or by mixing the powder with a small amount of water and pouring over the meal.

While the use of home placement testing is the most effective in determining if a product is effective in a real world situation, it often poses difficulties in gathering meaningful data. As most pet owners are not trained in clinical veterinary practices, signs such as skin discolouration and other such allergic type indicators may be misinterpreted by the untrained eye and the results obtained would misleading. However, one sign that pet owners are very familiar with is the quality of their pet's bowel motions.

Cleaning up and disposing of pet waste is one of the least enjoyable duties of pet ownership. When a pet's stool is loose or diarrheal, it presents a particularly unpleasant task, and can pose a significant health risk to the person cleaning it up.

Therefore, to judge the impact of the Additive on digestive health, the participants were asked to judge the quality of their pet's stool using the internationally recognised Waltham Faeces Scoring System. ⁷

The Waltham Faeces Scoring System uses a 5 point scale. A stool with a score of 1 is a solid mass of hard faeces that may be difficult for the animal to pass, while a score of 5 is unformed, watery and diarrheal. A low score of 1 or a high score of 5 will usually indicate gastrointestinal distress or disorder. The preferred target score is between 2.0 to 3.0.

The participants were asked to fill out an online survey on the seventh day, and again after the trial had concluded at the thirty day mark.
⁷ Reproduced from Moxham G. The WALTHAM Faeces Scoring System - A Tool for Veterinarians and Pet Owners: How does your pet rate? Waltham Focus. 2001; 11(2); 24-25*).*

The participants were asked to rate their pet's stools before the trial, at the 7-day mark and after the trial period (30 Days).

| **Table 3: Results of In-Home Placement Test** | | | |
|---|---|---|---|
| | **Day 0 (Pre- Trial)** | **Day 7** | **Day 30** |
| **Unacceptable Stools (Waltham Scores >2 and <3)** | 14 | 8 | 5 |
| **Acceptable Stools (Waltham Score 2-3)** | 7 | 12 | 15 |
| **% Acceptable Stools** | 33% | 60% | 75% |
| **Notes** | | One dog was withdrawn of the survey after the first week at the owner's request. Panel = 20 dogs | |

The trials showed a significant improvement in the quality of the pet's stools. The change in stool quality resulting from the use of the additive also had a positive impact on the attitude of the pet owners, as it made the daily clean-up easier. Many owners reported that the additive also gave them a sense of wellbeing as they felt that they had helped and improved their pet's health. The survey asked the participants to provide comments on the impressions of the use of the additive and the impact on their pet. The participants' responses are given as follows:
- "A lot easier to clean up. Shelby would often have severe bouts of diarrhoea 5 and 4.5 but since using the Additive, the worst I have had is a very little of 4."
- "I think they have definitely improved heaps"
- "It has improved plus it seems to be less."
   - "Hannibal's stools are firm in texture. He only goes once a day for a stool motion."
- "Very easy to pick up. Great advantage for me....the picker upper."
- "Most times the poos are a 2 to a 2.5. Sometimes it can be a 4 but not often."
- "He had been suffering from all sorts of stools before he had the Additive and kibble, even with just the Additive, his stools were a mixture of wet and very sloppy, but when mixed with the kibble, Morgan's stools were almost perfect, and that's pretty good considering he is on and off all sorts of different medication."
- "Not watery any more but still could be firmer... No more poop in the house which is very nice!"
- "Better formed and less runny."

It was concluded that the use of the Additive, according to the invention, in a pet's diet produced a significant improvement in pet health. The changes were significant and observable to the pet owners.

It will be appreciated by those skilled in the art that the above described embodiment is merely one example of how the inventive concept can be implemented.

## Claims

1. A digestive supplement including inactivated whole cells and lysed cells of *Saccharomyces cerevisiae* and Montmorillonite clay for use in improving the digestive health of canines.

2. The digestive supplement for use of claim 1, including cell wall products from lysed cells of *Saccharomyces cerevisiae.*

3. The digestive supplement for use of claim 2, wherein the cell wall products include Mannans, Beta-glucans and B-group vitamins

4. The digestive supplement for use of any one of the preceding claims, further including prebiotic material.

5. The digestive supplement for use of claim 4, wherein the prebiotic materials include at least one material selected from the group consisting of: inulin; glucose oligosaccharides e.g. derived from corn-starch; psyllium fibre; xanthan gum; and maltodextrin.

6. The digestive supplement for use of any one of the preceding claims, further including one or more components selected from the group consisting of: soluble fibres; insoluble fibres; vegetable starches; glucose; di-calcium phosphate; and vitamin C or other vitamins.

7. The digestive supplement for use of any one of the preceding claims wherein the dry mass ratio of yeast and yeast products to Montmorillonite clay is in the range 10:1 to 3:1.

8. The digestive supplement for use of claim 7, where in the food product is for feeding to canines and the ratio of yeast and yeast products to Montmorillonite clay is in the range 6:1 to 4:1

9. The digestive supplement for use of any one of claims 4 to 8, wherein the dry mass ratio of yeast and yeast products to prebiotic materials is in the range 20:1 to 4:1.

## Patentansprüche

1. Verdauungsergänzungsmittel, das inaktivierte ganze Zellen und lysierte Zellen von *Saccharomyces cerevisiae* und Montmorillonit-Ton einschließt, für die Verwendung zur Verbesserung der Verdauungsgesundheit von Hunden.

2. Verdauungsergänzungsmittel für die Verwendung nach Anspruch 1, das Zellwandprodukte von lysierten Zellen von *Saccharomyces cerevisiae* einschließt.

3. Verdauungsergänzungsmittel für die Verwendung nach Anspruch 2, wobei die Zellwandprodukte Mannane, Beta-Glucane und Vitamine der B-Gruppe einschließen.

4. Verdauungsergänzungsmittel für die Verwendung nach einem der vorstehenden Ansprüche, das weiter präbiotischen Stoff einschließt.

5. Verdauungsergänzungsmittel für die Verwendung nach Anspruch 4, wobei die präbiotischen Stoffe mindestens einen Stoff einschließen, der aus der Gruppe ausgewählt ist, die aus Folgenden besteht: Inulin; Glucose-Oligosaccharide, z. B. die aus Maisstärke stammen; Psyllium-Ballaststoff; Xanthangummi; und Maltodextrin.

6. Verdauungsergänzungsmittel für die Verwendung nach einem der vorstehenden Ansprüche, das weiter eine oder mehrere Komponenten einschließt, die aus der Gruppe ausgewählt sind, die aus Folgenden besteht: löslichen Ballaststoffen; unlöslichen Ballaststoffen; pflanzlichen Stärken; Glucose; Dicalciumphosphat; und Vitamin C oder anderen Vitaminen.

7. Verdauungsergänzungsmittel für die Verwendung nach einem der vorstehenden Ansprüche, wobei das Trockenmasseverhältnis von Hefe und Hefeprodukten zu Montmorillonit-Ton in dem Bereich von 10 : 1 bis 3 : 1 liegt.

8. Verdauungsergänzungsmittel für die Verwendung nach Anspruch 7, wobei das Nahrungsmittelprodukt zur Fütterung an Hunde vorgesehen ist und das Verhältnis von Hefe und Hefeprodukten zu Montmorillonit-Ton in dem Bereich von 6 : 1 bis 4 : 1 liegt.

9. Verdauungsergänzungsmittel für die Verwendung nach einem der Ansprüche 4 bis 8, wobei das Trockenmasseverhältnis von Hefe und Hefeprodukten zu präbiotischen Stoffen in dem Bereich von 20 : 1 bis 4 : 1 liegt.

## Revendications

1. Complément digestif comportant des cellules entières inactivées et des cellules lysées de *Saccharomyces cerevisiae* et de l'argile montmorillonite pour une utilisation dans l'amélioration de la santé digestive de canidés.

2. Complément digestif pour une utilisation selon la revendication 1, comportant des produits de parois cellulaires issus de cellules lysées de *Saccharomyces cerevisiae.*

3. Complément digestif pour une utilisation selon la revendication 2, dans lequel les produits de parois cellulaires comportent des mannanes, des bêta-glucanes et des vitamines du groupe B.

4. Complément digestif pour une utilisation selon l'une quelconque des revendications précédentes, comportant en outre un matériau prébiotique.

5. Complément digestif pour une utilisation selon la revendication 4, dans lequel les matériaux prébiotiques comportent au moins un matériau choisi dans le groupe constitué par : l'inuline ; les oligosaccharides de glucose, par exemple dérivés d'amidon de maïs ; la fibre de psyllium ; la gomme de xanthane ; et les maltodextrines.

6. Complément digestif pour une utilisation selon l'une quelconque des revendications précédentes, comportant en outre un ou plusieurs composants choisis dans le groupe constitué par : les fibres solubles ; les fibres insolubles ; les amidons végétaux ; le glucose ; le phosphate dicalcique ; et la vitamine C ou d'autres vitamines.

7. Complément digestif pour une utilisation selon l'une quelconque des revendications précédentes, dans lequel le rapport en masse sèche de la levure et des produits de levure à l'argile montmorillonite se trouve dans la plage allant de 10:1 à 3:1.

8. Complément digestif pour une utilisation selon la revendication 7, le produit alimentaire étant destiné à nourrir des canidés, et le rapport de la levure et des produits de levure à l'argile montmorillonite se trouvant dans la plage allant de 6:1 à 4:1.

9. Complément digestif pour une utilisation selon l'une quelconque des revendications 4 à 8, dans lequel le rapport en masse sèche de la levure et des produits de levure aux matériaux prébiotiques se trouve dans la plage allant de 20:1 à 4:1.
